# EUROPÄISCHE PATENTSCHRIFT

(11) **EP 2 999 620 B1**
(45) Veröffentlichungstag und Bekanntmachung des Hinweises auf die Patenterteilung: **19.08.2020**
(21) Anmeldenummer: 14720091.9
(22) Anmeldetag: 24.04.2014
(51) Int. Cl.: B62D 29/00, B62D 53/08

(54) **SATTELKUPPLUNGSPLATTE UND SATTELKUPPLUNG**
FIFTH WHEEL COUPLING PLATE AND FIFTH WHEEL COUPLING
PLAQUE DE SELLETTE D'ATTELAGE ET SELLETTE D'ATTELAGE

(30) Priorität: 22.05.2013 DE 102013105235
(43) Veröffentlichungstag der Anmeldung: 30.03.2016
(73) Patentinhaber: Hunger, Jan, 97074 Würzburg (DE)
(72) Erfinder: Hunger, Jan, 97074 Würzburg (DE)
(74) Vertreter: Witte, Weller & Partner Patentanwälte mbB
(86) Internationale Anmeldenummer: PCT/EP2014/058348
(87) Internationale Veröffentlichungsnummer: WO 2014/187642

(56) Entgegenhaltungen:
- EP-A1- 2 247 492
- FR-A1- 2 320 219
- US-A- 3 607 594
- US-A- 3 801 136
- US-A- 4 188 888
- US-A- 5 322 767

## Beschreibung

Die vorliegende Erfindung betrifft eine Sattelkupplungsplatte für eine Sattelkupplung, wobei die Sattelkupplungsplatte eine Oberseite zum Aufnehmen von vertikalen Kräften und eine Ausnehmung zum Einführen eines Königzapfens aufweist und wobei die Platte ein Leichtbaumaterial aufweist, wie es in dem Dokument EP 2 247 492 A1 offenbart ist.

Derartige Sattelkupplungen sind allgemein bekannt. Die Sattelkupplungsplatte wird dabei in der Regel über zwei Lagerböcke an einem Zugfahrzeug montiert. An einem Sattelauflieger-Anhänger ist ein Königzapfen festgelegt, der über die Königzapfen-Ausnehmung einführbar ist. An der Sattelkupplungsplatte ist in der Regel ein Verschluss montiert, der im geschlossenen Zustand einen in die Königzapfen-Ausnehmung eingeführten Königzapfen hintergreift. Der Verschluss ist dabei so an der Sattelkupplungsplatte festgelegt, dass er beim Beschleunigen des Zugfahrzeuges auftretende Kräfte aufnehmen kann. Beim Bremsen des Zugfahrzeuges drückt der Königzapfen durch das Gewicht des Anhängers in den Grund der Königzapfen-Ausnehmung.

Die Sattelkupplungsplatte derartiger Sattelkupplungen muss hohe Kräfte aufnehmen, und zwar sowohl in vertikaler Richtung, um das Gewicht des Sattelauflieger-Anhängers abzustützen bzw. ein Abheben des Sattelauflieger-Anhängers zu vermeiden, als auch in Richtungen quer hierzu, bspw. beim Bremsen, bei Kurvenfahrten und beim Beschleunigen.

Die Sattelkupplungsplatte ist daher im Stand der Technik in der Regel aus einem hochfesten Stahl hergestellt. Für kleinere Sattelkupplungen ist es auch bekannt, die Sattelkupplungsplatte aus einem Leichtbaumaterial wie einer Aluminiumlegierung herzustellen.

Die Sattelkupplungsplatte kann aus Gründen der Festigkeit durch Schmieden hergestellt werden. Dies ist jedoch vergleichsweise kostenaufwändig. Aus dem Dokument EP 1 697 206 B1 ist es bekannt, eine derartige Kupplungsplatte aus einem reinen Leichtbaumaterial wie einer Aluminiumlegierung durch Gießen herzustellen, insbesondere durch ein Gießschmiedeverfahren. Durch das Gießschmiedeverfahren soll eine vergleichsweise hohe Festigkeit der Sattelkupplungsplatte erreicht werden.

Ferner ist es bekannt, Sattelkupplungsplatten im Bereich des Grundes der Königzapfen-Ausnehmung zu verkleiden, um bspw. Reibungskräfte zu verringern. Ferner ist es bekannt, in dem Grund der Königzapfen-Ausnehmung einen Verschleißring einzusetzen.

Auch sind Sandwich-Konstruktionen derartiger Sattelkupplungsplatten bekannt, bei denen eine untere Sandwich-Lage bspw. aus einem Metallschaum hergestellt sein kann (DE 10 2008 006 203 B4). Hierdurch soll die Sattelkupplungsplatte ein deutlich verringertes Eigengewicht besitzen. Der Fertigungsaufwand ist jedoch vergleichsweise groß.
Das Dokument US 3 801 136 A offenbart eine weitere Sattelkupplungsplatte, die einen Tropfrand zum Auffangen von Schmiermittel beinhaltet.
Das Dokument FR 2 320 219 A1 offenbart eine Sattelkupplung mit einem Kupplungskörper, dessen Oberfläche zur Übertragung von Vertikalkräften dient. Die Oberfläche ist im Bereich der belasteten Stellen mit einer Feinprofilierung aus im geringen Abstand angeordneten zahlreichen Vertiefungen versehen.

Vor diesem Hintergrund ist es eine Aufgabe der Erfindung, eine verbesserte Sattelkupplungsplatte für eine Sattelkupplung sowie eine Sattelkupplung anzugeben, die ein geringes Gewicht aufweist, die kostengünstig herstellbar ist und/oder die hohe Kräfte aufnehmen kann bzw. eine hohe Lebensdauer aufweist.

Diese Aufgabe wird durch eine Sattelkupplungsplatte gemäß Anspruch 1 gelöst, wobei die Sattelkupplungsplatte aus einem Leichtmetall in einem Gussverfahren hergestellt ist, wobei eine Armierung aus einem festeren Material als das Leichtmetall in die Sattelkupplungsplatte eingegossen ist.

Hierdurch wird der Aufwand zur Herstellung der Sattelkupplungsplatte nicht wesentlich gegenüber dem Stand der Technik erhöht, bei dem die Sattelkupplungsplatte aus einem reinen Leichtbaumaterial wie Aluminium gegossen wird. Auch ist das Herstellungsverfahren deutlich kostengünstiger als bspw. ein Aluminium-Schmiedeverfahren.

Gegenüber Sattelkupplungsplatten aus Stahl ergibt sich ein deutlich geringeres Gewicht, mit damit einhergehenden Vorteilen wie bspw. geringerer Kraftstoffverbrauch des Kraftfahrzeuges.

Die Armierung ist dabei vorzugsweise in der Lage, die in die Sattelkupplungsplatte eingeleiteten Kräfte zu verteilen. Eine derartige Armierung kann ggf. zudem dafür sorgen, dass die relativ geringe Zugfestigkeit einer gegossenen Aluminiumlegierung kompensiert werden kann.

Das Leichtbaumaterial der Sattelkupplungsplatte kann insbesondere eine Aluminiumlegierung sein, die vorzugsweise ausgewählt ist aus einem der folgenden Materialien: AICu4TiMg, AICu4Ti oder AlSi7Mg 0,6. Die Armierung kann aus einem festeren Material hergestellt sein, das vorzugsweise dazu ausgelegt ist, keine oder im Wesentlichen keine Festigkeitsverringerungen während des Gießprozesses zu erleiden, bei dem die Armierung in die Sattelkupplungsplatte eingegossen wird. Daher kann die Armierung aus Stahl hergestellt sein, kann jedoch ggf. auch aus Carbon hergestellt sein und kann auch aus einem Verbundmaterial hergestellt sein.

Die obige Aufgabe wird ferner gelöst durch eine Sattelkupplung gemäß Anspruch 12.

Der Lagerbock kann dabei ebenfalls aus einem Leichtbaumaterial hergestellt sein und kann eine Armierung aufweisen, die gleich jener ausgebildet ist, wie sie auch für die Sattelkupplungsplatte verwendet wird. Der Lagerbock kann jedoch auch aus einem Stahl hergestellt sein, in dem eine derartige Armierung integriert ist, das vorzugsweise aus einem festeren Material als das Lagerbockmaterial hergestellt ist. Die Armierung kann dabei eingegossen sein und aus einem festeren Material hergestellt sein, wie insbesondere aus einem Kohlenstofffasermaterial, einem metallischen Material oder aus Verbundmaterialien hieraus.
Ferner wird die obige Aufgabe gelöst durch ein Verfahren zum Herstellen einer Sattelkupplungsplatte für eine Sattelkupplung gemäß Anspruch 13, wobei die Sattelkupplungsplatte eine Oberseite zum Aufnehmen von vertikalen Kräften und eine Ausnehmung zum Einführen eines Königzapfens aufweist und wobei die Sattelkupplungsplatte ein Leichtbaumaterial aufweist, wobei die Sattelkupplungsplatte aus einem Leichtmetall in einem Gussverfahren hergestellt wird und wobei eine Armierung aus einem festeren Material als das Leichtmetall in die Sattelkupplungsplatte eingegossen wird.

Gemäß einer bevorzugten Ausführungsform weist die Armierung ein im Wesentlichen zweidimensionales Armierungsgeflecht aus wenigstens einem Armierungsstrang auf.

Hierdurch können die in die Sattelkupplungsplatte eingeleiteten Kräfte in den zwei Dimensionen besser verteilt werden, so dass keine Belastungsspitzen innerhalb der Sattelkupplungsplatte auftreten.

Der Begriff des Armierungsgeflechtes ist vorliegend breit zu verstehen. Bei dem Armierungsgeflecht kann es sich um einen einzelnen Armierungsstrang handeln, der nach der Art des Strickens bzw. Wirkens bzw. Häkelns bzw. Flechtens zu einer zweidimensionalen Struktur umgeformt worden ist. Bei einem Armierungsgeflecht kann es sich jedoch auch um wenigstens zwei Armierungsstränge handeln, die direkt oder indirekt miteinander verbunden sind. Die Armierungsstränge können dabei bspw. über Kreuz gelegt werden und an den Schnittstellen miteinander verbunden sein, bspw. durch Schweißen. Die Armierungsstränge können jedoch auch mit anderen Bauteilen, die ggf. in die Sattelkupplungsplatte eingegossen werden, verbunden sein bzw. über diese verbunden sein.

Gemäß einer weiteren bevorzugten Ausführungsform weist die Armierung ein dreidimensionales Geflecht aus wenigstens einem Armierungsstrang auf.

Bei dieser Ausführungsform kann die Armierung für eine gute Lastverteilung in allen drei Raumkoordinaten bzw. -achsen sorgen. Der Begriff des Armierungsgeflechtes ist, wie oben erwähnt, wiederum breit zu verstehen.

Gemäß einer weiteren bevorzugten Ausführungsform weist die Armierung einen Armierungsabschnitt auf, der auf einer Längsachse der Königzapfen-Ausnehmung angeordnet ist.

In Sattelkupplungen treten, insbesondere beim Bremsen, sehr hohe Druckkräfte auf den Grund der Königzapfen-Ausnehmung auf, die mittels eines derartigen Armierungsabschnittes innerhalb der Sattelkupplungsplatte gut verteilt werden können.

Ferner kann ein derartiger Armierungsabschnitt vorzugsweise auch Kräfte aufnehmen und in der Sattelkupplungsplatte verteilen, die in den Sattelkupplungsverschluss eingeleitet werden. In der Regel sind Lagerstellen für einen Sattelkupplungsverschluss benachbart zu dem Grund des Königzapfens in der Sattelkupplungsplatte vorgesehen. Der Armierungsabschnitt kann daher sich dabei auch um oder hin zu diesen Lagerstellen erstrecken, um auf diese Weise auch in den Verschluss eingeleitete Kräfte besser in die Sattelkupplungsplatte einleiten zu können.

Gemäß einer weiteren bevorzugten Ausführungsform weist die Armierung wenigstens einen Armierungsabschnitt auf, der seitlich neben dieser Längsachse angeordnet ist.

Bei Sattelkupplungen wird die Sattelkupplungsplatte in der Regel über Lagerböcke an einem Zugfahrzeug montiert, die seitlich neben der Längsachse angeordnet sind. In die Sattelkupplungsplatte eingeleitete Kräfte werden über die Lagerböcke in das Zugfahrzeug eingeleitet bzw. von dem Zugfahrzeug ausgeübte Kräfte werden über die Lagerböcke in die Sattelkupplungsplatte eingeleitet. Demzufolge treten auch in einem Bereich, in dem ein Lagerbock mit der Sattelkupplungsplatte verbunden ist, Belastungsspitzen auf, die mittels eines Armierungsabschnittes besser verteilt werden können.

Von besonderem Vorzug ist es, wenn die Armierung einen in der Draufsicht auf die Sattelkupplungsplatte U-förmigen Armierungsabschnitt aufweist, der um die Königzapfen-Ausnehmung herum angeordnet ist.

Mittels eines derartigen U-förmigen Armierungsabschnittes können sowohl in den Grund oder in die Seiten der Königzapfen-Ausnehmung eingeleitete Kräfte gut verteilt werden. Auch über die Verbindung zu den Lagerböcken übertragene Kräfte können auf diese Weise gut innerhalb der Sattelkupplungsplatte verteilt werden. Bevorzugt liegen Lagerpunkte für die Lagerböcke in der Draufsicht innerhalb des Bereiches, in dem der U-förmige Armierungsabschnitt ausgebildet ist.

Ferner ist die Sattelkupplungsplatte in der Regel mit einem Königzapfen-Verschluss verbunden, wobei der U-förmige Armierungsabschnitt sich vorzugsweise in der Draufsicht alternativ oder zusätzlich über jene Bereiche erstreckt, bei denen der Königzapfen-Verschluss mit der Sattelkupplungsplatte verbunden ist.

Lagerpunkte zum Festlegen der Sattelkupplungsplatte an Lagerböcken und/oder Lagerpunkte zum Festlegen eines Königzapfen-Verschlusses an der Sattelkupplungsplatte, können in vorteilhafter Weise Lagerbuchsen aufweisen, die in die Sattelkupplungsplatte mit eingegossen werden.

Eine Lagerbuchse für einen Lagerbocksteg kann beispielsweise topfartig mit einer nach unten ausgerichteten Öffnung sein, über die ein Lagerbocksteg einführbar ist. Die Lagerbuchse kann aus einem festeren Material als der Rest der Sattelkupplungsplatte gebildet sein, beispielsweise aus einem Stahl.

Somit ist es insgesamt von Vorteil, wenn die Sattelkupplungsplatte eine solche Lagerbockausnehmung aufweist, in die ein Lagerbocksteg aufnehmbar ist.

Dabei ist es von besonderem Vorteil, wenn die Armierung die Lagerbockausnehmung überdeckt.

Hierdurch können die von dem Lagerbock in die Sattelkupplungsplatte oder umgekehrt geleiteten Kräfte mittels der Armierung großflächig in die Sattelkupplungsplatte eingeleitet werden.

Von besonderem Vorzug ist es hierbei, wenn in der Lagerbockausnehmung eine Lagerbuchse eingesetzt ist, die mit der Armierung verbunden ist.

Hierdurch ist es möglich, die Kraftübertragung direkt von der Lagerbuchse in die Armierung vorzusehen, was erneut Vorteile bei der Festigkeit mit sich bringt.

Gemäß einer weiteren insgesamt bevorzugten Ausführungsform ist in der Sattelkupplungsplatte wenigstens ein Verbindungsloch zur Verbindung der Sattelkupplungsplatte mit einem Lagerbock und/oder wenigstens ein Verschlusslager für einen Kupplungsverschluss ausgebildet.

Ein derartiges Verbindungsloch (in der Regel zwei auf gegenüberliegenden Seiten der Lagerbockausnehmung angeordnete Verbindungslöcher) dienen zur Durchführung von Bolzen oder Schrauben oder dgl., mittels denen ein Lagerbockbügel an der Sattelkupplungsplatte festgelegt werden kann, der einen Lagerbocksteg hintergreift. Über die Verbindungslöcher werden folglich im Wesentlichen Kräfte in vertikaler Richtung übertragen, die einem Abheben der Sattelkupplungsplatte von dem Lagerbock entgegenwirken.

Verschlusslager für einen Kupplungsverschluss können ebenfalls in Löchern der Sattelkupplungsplatte ausgebildet sein oder auf sonstige Art und Weise in die Sattelkupplungsplatte eingegossen sein.

Die Armierung ist hierbei vorzugsweise so ausgebildet, dass sie das Verbindungsloch und/oder das Verschlusslager umgibt.

Insbesondere kann in der Armierung eine Ausnehmung vorgesehen sein, durch die hindurch das Verbindungsloch verläuft, derart, dass die Armierung vorzugsweise nicht gegenüber dem Innenumfang des Verbindungsloches vorsteht.

Die Armierung kann im Bereich der Verschlusslager in ähnlicher Weise ausgebildet sein.

Das Material, aus dem die Sattelkupplungsplatte in einem Gussverfahren hergestellt wird, ist ein Leichtmetall wie ein Aluminiummaterial, ein Magnesiummaterial oder dergleichen, insbesondere eine Legierung derartiger Metallmaterialien.

Die Armierung ist aus einem Material hergestellt, das eine höhere Festigkeit als das Leichtmetall aufweist, insbesondere aus einem Kohlenstofffasermaterial wie Kevlar, aus einem metallischen Material wie Stahl oder aus Verbundmaterialien hieraus.

Die Armierung ist vorzugsweise vollständig in die Sattelkupplungsplatte eingegossen. Hierdurch können bspw. im Falle von Stahl Korrosionsprobleme vermieden werden.

Im Falle eines dreidimensionalen Drahtgeflechtes kann dieses bspw. hergestellt sein, wie es beschrieben ist in dem Dokument DE 10 2008 063 289 A1.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische schematische Darstellung einer Sattelkupplung;
- Fig. 2: eine Draufsicht und eine Ansicht von unten einer erfindungsgemäßen Sattelkupplungsplatte;
- Fig. 3: eine Schnittansicht entlang der Linie III-III der Fig. 2;
- Fig. 4: eine der Fig. 3 vergleichbare Ansicht einer weiteren Ausführungsform einer erfindungsgemäßen Sattelkupplungsplatte;
- Fig. 5: eine der Fig. 3 vergleichbare Ansicht einer weiteren Ausführungsform einer erfindungsgemäßen Sattelkupplungsplatte;
- Fig. 6: eine schematische Draufsicht mit Darstellung der Lage von Armierungsabschnitten, die in die Sattelkupplungsplatte eingegossen sind;
- Fig. 7: eine schematische perspektivische Darstellung eines dreidimensionalen Armierungsgeflechtes; und
- Fig. 8: eine der Fig. 3 vergleichbare Ansicht einer weiteren Ausführungsform einer erfindungsgemäßen Sattelkupplungsplatte, montiert an einem Lagerbock.

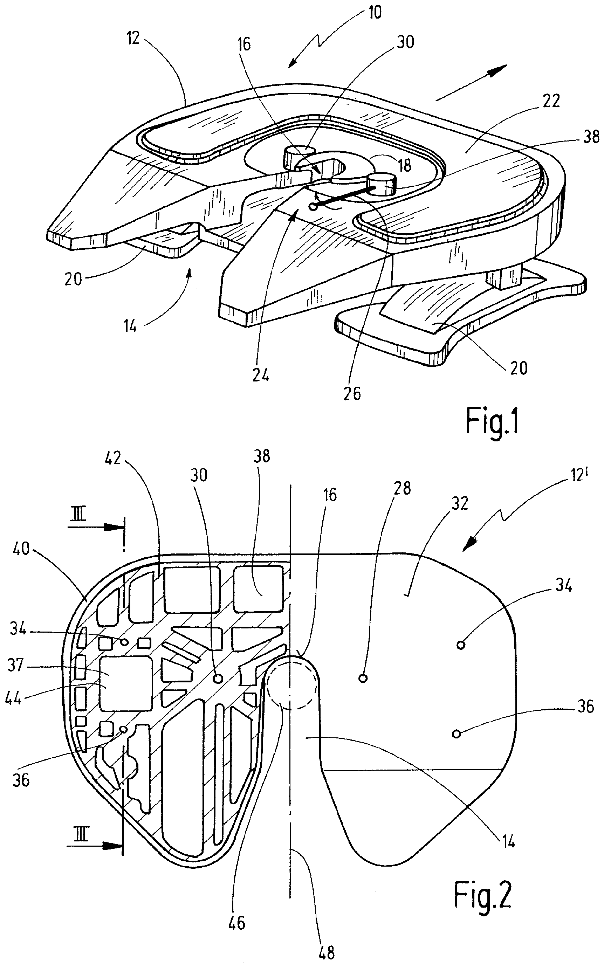

In Fig. 1 ist in perspektivischer schematischer Darstellung eine Sattelkupplung zum Verbinden einer Zugmaschine mit einem Auflieger gezeigt und generell mit 10 bezeichnet. Die Sattelkupplung 10 beinhaltet eine Sattelkupplungsplatte 12, die eine Ausnehmung 14 zur Aufnahme eines Königzapfens aufweist. Der Grund der Ausnehmung 14 ist in Fig. 1 bei 16 gezeigt. In den Grund 16 der Ausnehmung 14 kann, wie dargestellt, ein Verschleißring 18 eingesetzt sein.

Die Sattelkupplungsplatte 12 ist über zwei Lagerböcke 20 fest und vorzugsweise nicht verdrehbar mit dem Rahmen einer Zugmaschine verbindbar.

Auf der Oberseite der Sattelkupplungsplatte 12 kann, wie dargestellt, ein reibungsverringender Belag 22 aufgebracht sein.

An der Sattelkupplungsplatte 12 ist ferner ein Verschluss 24 vorgesehen, der in Fig. 1 schematisch dargestellt ist. Der Verschluss 24 beinhaltet einen Verschlussriegel 26, der über ein erstes Verschlusslager 28 verschwenkbar an der Sattelkupplungsplatte 12 festgelegt ist. Ein freies Ende des Verschlussriegels 26 kann an einem zweiten Verschlusslager 30 festgelegt bzw. verriegelt werden. Der Verschlussriegel 26 hintergreift dabei einen in den Grund 16 der Ausnehmung 14 eingeführten Königzapfen, der fest mit dem Auflieger verbunden ist, um auf diese Weise die gelenkige Verbindung zwischen der Zugmaschine und dem Auflieger herzustellen.

In Fig. 2 ist schematisch eine Sattelkupplungsplatte 12' gezeigt, die bspw. für die Sattelkupplung 10 der Fig. 1 verwendbar ist.

Fig. 2 zeigt auf der rechten Seite die Sattelkupplungsplatte 12' von der Oberseite, und auf der linken Seite die Sattelkupplungsplatte 12 von der Unterseite. Die Oberseite der Sattelkupplungsplatte 12' ist in Fig. 2 mit 32 bezeichnet. Ferner ist an der Oberseite 32 zu erkennen, dass auf gegenüberliegenden Seiten einer Längsachse ein erstes Verbindungsloch 34 und ein zweites Verbindungsloch 36 vorgesehen sind, die dazu dienen, die Sattelkupplungsplatte 12 mit einem der Lagerböcke 20 zu verbinden. In die Lagerstellen 28 und in die Verbindungslöcher 34, 36 kann jeweils eine Lagerbuchse eingebracht werden, bspw. zum Einführen eines jeweiligen Lagerbolzens. Die Verbindungslöcher 34, 36 liegen auf gegenüberliegenden Seiten von jeweiligen Lagerbockausnehmungen 37, in die jeweils ein Lagerbocksteg einführbar ist. Über die Verbindungslöcher 34, 36 wird vorzugsweise ein Bügel an der Sattelkupplungsplatte 12 befestigt, der den Lagerbocksteg hintergreift und verhindert, dass die Sattelkupplungsplatte 12 von dem Lagerbock 20 abgehoben wird. Die Lagerbockausnehmungen 37 können mit einer Lagerbuchse ausgebildet sein.

Auf der linken Seite von Fig. 2 ist die Unterseite der Sattelkupplungsplatte 12' mit 38 bezeichnet. Am Außenumfang der Unterseite 38 kann ein umlaufender Steg 40 ausgebildet sein. In dem Raum dazwischen können gegenüber der Unterseite 38 hervorstehende Rippen 42 ausgebildet sein, die zur Versteifung der Sattelkupplungsplatte 12' dienen.

Demzufolge ergeben sich zwischen den Rippen 42 jeweilige Vertiefungen 44, beispielsweise die Lagerbockausnehmungen 37.

In Fig. 2 ist ferner schematisch dargestellt, dass ein Königzapfen 46 in die Ausnehmung 14 eingeführt ist. Die Ausnehmung 14 definiert eine Längsachse 48 der Sattelkupplungsplatte 12'.

Die Sattelkupplungsplatte 12' ist aus einem Leichtbaumaterial hergestellt, insbesondere aus einem Leichtmetall wie Aluminium, wie Magnesium, einer Aluminiumlegierung, einer Magnesiumlegierung, oder einer beliebigen Kombination hiervon. Die Sattelkupplungsplatte 12' ist dabei in einem Gießverfahren hergestellt, insbesondere in einem Gießschmiedeverfahren, wie es bspw. in dem Dokument EP 1 697 206 B1 beschrieben ist, auf dessen Offenbarungsgehalt vorliegend vollumfänglich Bezug genommen wird.

Aufgrund der hohen Kräfte, die zwischen dem Königzapfen 46 und den Lagerböcken 20 übertragen werden und die von der Sattelkupplungsplatte 12' aufzunehmen sind, ist in die Sattelkupplungsplatte 12' eine Armierung eingegossen, die insbesondere dazu dient, die punktuell im Bereich der Lagerstellen 28, 30, im Bereich der Lagerbockausnehmungen 37 und/oder im Bereich der Verbindungslöcher 34, 36 eingeleiteten Kräfte aufzunehmen und zu verteilen.

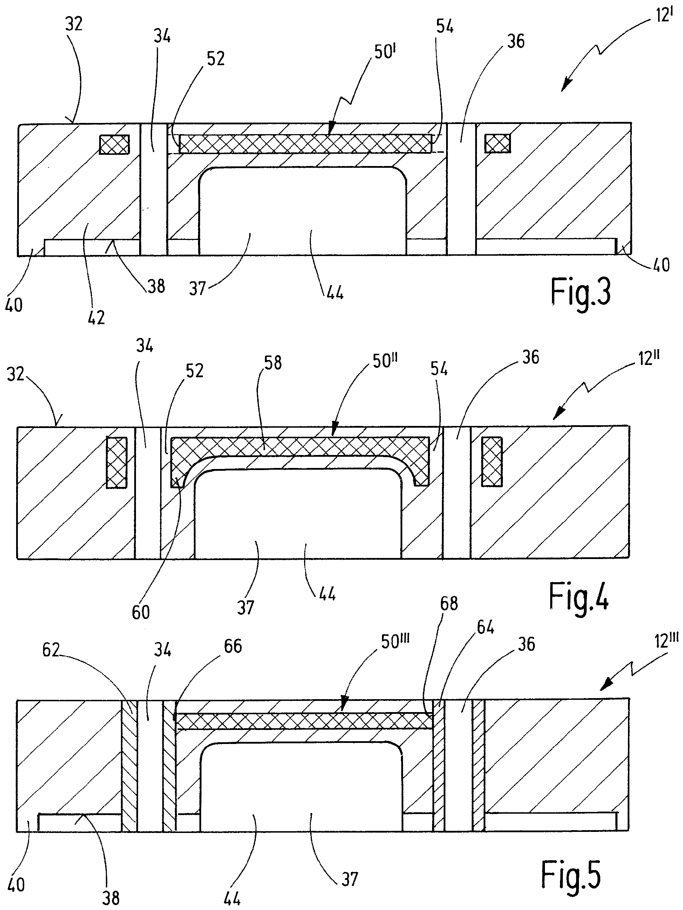

Fig. 3 stellt eine schematische Schnittansicht entlang der Linie III-III von Fig. 2 dar. Man erkennt, dass in die Sattelkupplungsplatte 12' eine Armierung 50' eingegossen ist, die im Wesentlichen flächig ausgebildet ist und zwei Armierungsausnehmungen 52, 54 aufweist, durch die hindurch die Verbindungslöcher 34, 36 verlaufen. Die Armierung 50' ist dabei im vorliegenden Fall im Wesentlichen zweidimensional ausgebildet und erstreckt sich insbesondere auch in einem Bereich zwischen einem Boden der Lagerbockvertiefung 37 und der Oberseite 32. Die Armierung 50' kann insbesondere dadurch, dass sie die Lagerbockvertiefungen 37 überdeckt und die Verbindungslöcher 34, 36 umgibt, die hier eingeleiteten Kräfte besser verteilen, so dass sich innerhalb des Materials der Sattelkupplungsplatte 12' keine unzulässigen Spannungsspitzen ergeben, die die Dauerhaltbarkeit bzw. Lebensdauer der Sattelkupplungsplatte 12' einschränken könnten. Es versteht sich, dass eine ähnliche Armierung 50' auch im Bereich der Verschlusslager 28, 30 vorgesehen sein kann, oder dass ggf. eine solche Armierung nur im Bereich der Verschlusslager 28, 30, nicht jedoch im Bereich der Lagerbockvertiefung 37 und der Verbindungslöcher 34, 36 vorgesehen sein kann.

In Fig. 4 ist eine weitere Ausführungsform einer Sattelkupplungsplatte 12" gezeigt, die hinsichtlich Aufbau und Funktionsweise generell der Sattelkupplungsplatte 12' der Fig. 3 entspricht. In die Sattelkupplungsplatte 12" ist dabei eine Armierung 50" eingegossen, die im Wesentlichen dreidimensional ausgebildet ist. Die Armierung 50" beinhaltet einen ebenen Abschnitt 58, dessen Ausgestaltung im Wesentlichen der Armierung 50' der Fig. 3 entspricht. Ferner beinhaltet die Armierung 50" Vertikalabschnitte 60, die sich in einer Richtung quer zur Oberseite 32 erstrecken und die vorzugsweise die Lagerbockvertiefungen 37 auch seitlich und/oder die Verbindungslöcher 34, 36 (und/oder Verschlusslager 28, 30) buchsenartig umgeben.

Hierdurch kann eine noch bessere Verteilung von Kräften innerhalb der Sattelkupplungsplatte 12' erzielt werden.

Fig. 5 zeigt eine weitere alternative Ausführungsform einer Sattelkupplungsplatte 12"', die hinsichtlich Aufbau und Funktionsweise generell der Sattelkupplungsplatte 12' oder der Sattelkupplungsplatte 12" der Fig. 3 bzw. 4 entspricht.

Bei der Sattelkupplungsplatte 12'" sind im Bereich der Verbindungslöcher 34, 36 (und/oder der Verschlusslager 28, 30) jeweilige Lagerbuchsen 62, 64 in die Sattelkupplungsplatte eingegossen, die bspw. aus einem festeren bzw. härteren Material als das Leichtbaumaterial der Sattelkupplungsplatte 12'" hergestellt sind.

Die Sattelkupplungsplatte 12'" weist dabei eine Armierung 50'" auf, die grundsätzlich ähnlich aufgebaut sein kann wie die Armierung 50' der Fig. 3 oder die Armierung 50" der Fig. 4. Im vorliegenden Fall ist jedoch vorgesehen, dass die Armierung 50'" mit den eingegossenen Lagerbuchsen 62, 64 verbunden ist, und zwar mittels jeweiliger Verbindungen 66, 68. Diese Verbindungen 66, 68 können bspw. als Schweiß-, als Klebe- oder als sonstige Fügeverbindungen ausgebildet sein.

Bei dieser Ausführungsform können in die jeweiligen Lagerbuchsen 62, 64 eingeleitete Kräfte unmittelbar in die Armierung 50'" eingeleitet werden, um auf diese Weise die eingeleiteten Kräfte besser verteilen zu können.

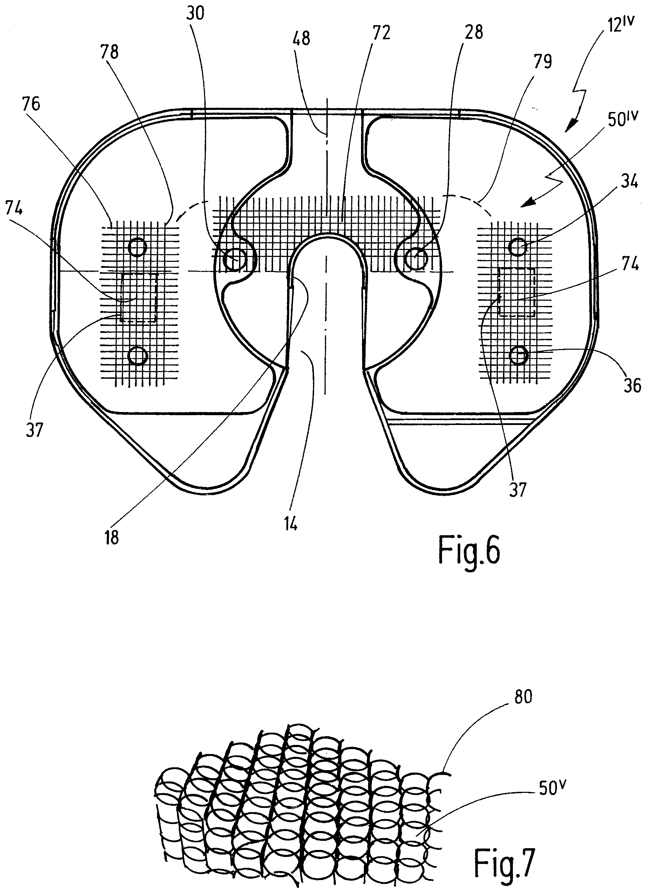

Fig. 6 zeigt eine weitere Ausführungsform einer Sattelkupplungsplatte 12^{IV}, die hinsichtlich Aufbau und Funktionsweise den obigen Sattelkupplungsplatten entsprechen kann. Die Sattelkupplungsplatte 12^{IV} beinhaltet eine Armierung 50^{IV}, die aus wenigstens zwei, vorliegend drei voneinander getrennten Armierungsabschnitten gebildet ist. Ein erster Armierungsabschnitt 72 liegt dabei auf der Längsachse 48 und verbindet die Verschlusslager 28, 30 und/oder den Verschleißring 18 am Grund der Ausnehmung 14.

Ein zweiter Armierungsabschnitt 74 ist parallel versetzt zu der Längsachse 48 vorgesehen und verbindet die Verbindungslöcher 34, 36. Auf der der Längsachse 48 gegenüberliegenden Seite ist ein entsprechender zweiter Armierungsabschnitt 74 zum Verbinden der Verbindungslöcher für den zweiten Lagerbock vorgesehen. Ferner ist zu erkennen, dass die zweiten Armierungsabschnitte 74 jeweils die ihnen zugeordneten Lagerbockausnehmungen 37 überdecken.

Es ist in Fig. 6 angedeutet, dass die Armierungsabschnitte 72, 74 jeweils Armierungsstränge 76, 78 aufweisen, die quer zueinander ausgerichtet sind und bspw. eine zweidimensionale Gitterstruktur bilden. Es versteht sich, dass durch das Bereitstellen von weiteren Armierungssträngen, die senkrecht zu der Zeichnungsebene verlaufen, auch eine dreidimensionale Armierung bereitgestellt werden kann, die aus solchen im Wesentlichen gerade verlaufenden Armierungssträngen hergestellt wird.

Bei 79 ist ferner schematisch angedeutet, dass die Armierungsabschnitte 72, 74 auch miteinander verbunden sein können, derart, dass ein in der Draufsicht einzelner U-förmiger Armierungsabschnitt gebildet wird, der die Ausnehmung 14 umgibt.

Die Armierungsabschnitte können anstelle aus einzelnen Armierungssträngen, die miteinander verbunden werden, auch jeweils aus einem einzelnen Armierungsstrang gebildet sein, der auf geeignete Weise verlegt bzw. geflochten oder gewirkt ist.

Fig. 7 zeigt in schematischer Form ein Beispiel einer solchen Armierung 50^{v}, die durch einen einzelnen Armierungsstrang 80 gebildet ist, der in eine dreidimensionale Struktur gewunden bzw. geflochten ist, wie es bspw. in dem Dokument 10 2008 063 289 A1 offenbart ist.

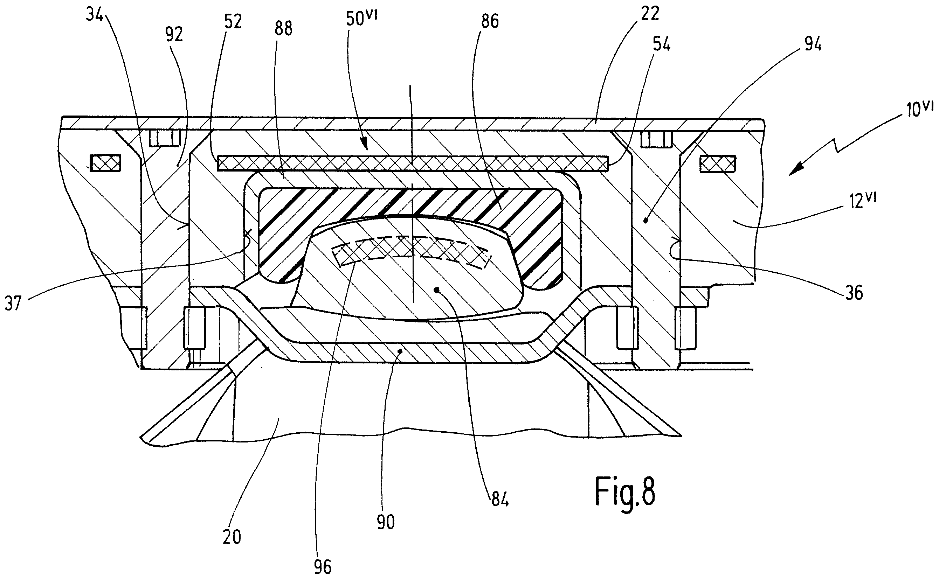

Eine weitere Ausführungsform einer Sattelkupplungsplatte ist schematisch in Fig. 8 dargestellt und dort generell mit 12' bezeichnet. In Fig. 8 ist ferner ein beispielhafter Lagerbock 20 der Sattelkupplungsplatte 10^{VI} gezeigt. Die Sattelkupplungsplatte 12^{VI} kann den oben beschriebenen Sattelkupplungsplatten hinsichtlich Aufbau und Funktionsweise entsprechen. Gleiche Elemente sind daher durch gleiche Bezugszeichen gekennzeichnet. Im Folgenden werden im Wesentlichen die Unterschiede erläutert.

Der Lagerbocksteg 20 weist einen Lagerbocksteg 84 auf, an dessen Oberseite ein Gummikissen 86 oder dgl. angeordnet ist. In die Lagerbockausnehmung 37 ist eine Lagerbuchse 88 aus einem hochfesten Material eingegossen, beispielsweise aus Stahl. Der Lagerbocksteg 84 ist zumindest teilweise in die Lagerbuchse 88 eingeführt, derart, dass das Gummikissen 86 zwischen dem Lagerbocksteg 84 und der Innenfläche der Lagerbuchse 88 angeordnet ist.

In Fig. 8 ist ferner zu erkennen, dass der Lagerbock einen Bügel 90 aufweist, der sich unterhalb des Lagerbockstegs 84 zwischen den Verbindungslöchern 34, 36 erstreckt. Durch die Verbindungslöcher 34, 36 sind jeweilige Schrauben 92, 94 eingeführt, die den Bügel 90 mit der Sattelkupplungsplatte 12^{VI} verbinden.

Ferner ist in Fig. 8 eine Armierung 50^{VI} gezeigt, die so in das Material der Sattelkupplungsplatte 12^{VI} eingegossen ist, dass sie mit der Lagerbuchse 88 verbunden ist, wobei die Verbindung, wie oben beschrieben, als Schweiß-, als Klebe- oder als sonstige Fügeverbindung ausgebildet sein kann. Die Armierung 50^{VI} kann auch als dreidimensionale Struktur ausgebildet sein, die vertikal verlaufende Abschnitte aufweist, die die Lagerbuchse 88 umgeben.

In Fig. 8 ist ferner schematisch angedeutet, dass auch der Lagerbock eine Armierung der erfindungsgemäßen Art beinhalten kann, die in Fig. 8 schematisch mit 96 bezeichnet ist. Die Armierung 96 kann, wie in Fig. 8 gezeigt, beispielsweise in den Lagerbocksteg 84 integriert sein.

Die Armierungen 50, die oben beschrieben sind, sind vorzugsweise aus Draht hergestellt, vorzugsweise aus einem hochfesten Draht wie hochfestem Stahl, Edelstahl oder dergleichen. Der Schmelzpunkt des Armierungsmaterials ist vorzugsweise höher als die Schmelztemperatur des Leichtbaumaterials, aus dem die Sattelkupplungsplatten gegossen werden, so dass die Armierung während des Gießprozesses formstabil bleibt. Alternative Materialien für die Armierung sind Kohlenstofffasermaterialien oder Verbundmaterialien aus Kohlenstofffasermaterial und Metallmaterial.

## Patentansprüche

1. Sattelkupplungsplatte (12) für eine Sattelkupplung (10), wobei die Sattelkupplungsplatte (12) eine Oberseite zum Aufnehmen von vertikalen Kräften und eine Ausnehmung (14) zum Einführen eines Königzapfens (46) aufweist und wobei die Sattelkupplungsplatte (12) ein Leichtbaumaterial aufweist,
**dadurch gekennzeichnet, dass**
die Sattelkupplungsplatte (12) aus einem Leichtmetall in einem Gussverfahren hergestellt ist, wobei eine Armierung (50) aus einem festeren Material als das Leichtmetall in die Sattelkupplungsplatte (12) eingegossen ist.

2. Sattelkupplungsplatte nach Anspruch 1, wobei die Armierung (50) ein im Wesentlichen zweidimensionales Geflecht aus wenigstens einem Armierungsstrang (76, 78) aufweist.

3. Sattelkupplungsplatte nach Anspruch 1 oder 2, **dadurch gekennzeichnet, dass** die Armierung (50) ein dreidimensionales Geflecht aus wenigstens einem Armierungsstrang (80) aufweist.

4. Sattelkupplungsplatte nach einem der Ansprüche 1 bis 3, **dadurch gekennzeichnet, dass** die Armierung (50) einen Armierungsabschnitt (72) aufweist, der auf einer Längsachse (70) der Königzapfen-Ausnehmung (14) angeordnet ist.

5. Sattelkupplungsplatte nach einem der Ansprüche 1 bis 4, **dadurch gekennzeichnet, dass** die Armierung (50) einen Armierungsabschnitt (74) aufweist, der seitlich neben einer Längsachse (70) der Königzapfen-Ausnehmung (14) angeordnet ist.

6. Sattelkupplungsplatte nach einem der Ansprüche 1 bis 5, **dadurch gekennzeichnet, dass** die Armierung (50) einen in der Draufsicht auf die Sattelkupplungsplatte U-förmigen Armierungsabschnitt (79) aufweist, der um die Königzapfen-Ausnehmung (14) herum angeordnet ist.

7. Sattelkupplungsplatte nach einem der Ansprüche 1 bis 6, **dadurch gekennzeichnet, dass** die Sattelkupplungsplatte (12) eine Lagerbockausnehmung (37) aufweist, in die ein Lagerbocksteg (84) aufnehmbar ist.

8. Sattelkupplungsplatte nach Anspruch 7, **dadurch gekennzeichnet, dass** die Armierung die Lagerbockausnehmung überdeckt.

9. Sattelkupplungsplatte nach Anspruch 7 oder 8, **dadurch gekennzeichnet, dass** in der Lagerbockausnehmung (37) eine Lagerbuchse (88) eingesetzt ist, die mit der Armierung (50^{IV}) verbunden ist.

10. Sattelkupplungsplatte nach einem der Ansprüche 1 bis 9, **dadurch gekennzeichnet, dass** in der Sattelkupplungsplatte (12) wenigstens ein Verbindungsloch (34, 36) zur Verbindung der Sattelkupplungsplatte (12) mit einem Lagerbock (20) und/oder wenigstens ein Verschlusslager (28, 30) für einen Kupplungsverschluss (24) ausgebildet ist.

11. Sattelkupplungsplatte nach Anspruch 10, **dadurch gekennzeichnet, dass** die Armierung (50) das Verbindungsloch (34, 36) und/oder das Verschlusslager (28, 30) umgibt.

12. Sattelkupplung (10) für ein Fahrzeug, mit wenigstens einem Lagerbock (20), einer Sattelkupplungsplatte (12) und einem Königszapfen (46), wobei die Sattelkupplungsplatte (12) eine Sattelkupplungsplatte (12) nach einem der Ansprüche 1 bis 11 ist, und/oder wobei in den Lagerbock (20) eine Armierung (96) aus einem festen Material integriert ist.

13. Verfahren zum Herstellen einer Sattelkupplungsplatte (12) für eine Sattelkupplung (10), wobei die Sattelkupplungsplatte (12) eine Oberseite zum Aufnehmen von vertikalen Kräften und eine Ausnehmung (14) zum Einführen eines Königzapfens (46) aufweist und wobei die Sattelkupplungsplatte (12) ein Leichtbaumaterial aufweist,
**dadurch gekennzeichnet, dass**
die Sattelkupplungsplatte (12) aus einem Leichtmetall in einem Gussverfahren hergestellt wird, wobei eine Armierung (50) aus einem festeren Material als das Leichtmetall in die Sattelkupplungsplatte (12) eingegossen wird.

## Claims

1. A fifth wheel plate (12) for a fifth wheel coupling (10), the fifth wheel plate (12) having an upper surface for receiving vertical forces and a recess (14) for inserting a kingpin (46), the fifth wheel plate (12) comprising a lightweight material,
**characterized in that**
the fifth wheel plate (12) is made of a light metal in a casting process, wherein a reinforcement (50) of a material having a higher strength than that of the light metal is cast into the fifth wheel plate (12).

2. The fifth wheel plate according to claim 1, wherein the reinforcement (50) comprises a substantially two-dimensional mesh of at least one reinforcement strand (76, 78).

3. The fifth wheel plate according to claim 1 or 2, **characterized in that** the reinforcement (50) comprises a three-dimensional mesh of at least one reinforcement strand (80).

4. The fifth wheel plate according to any one of claims 1 to 3, **characterized in that** the reinforcement (50) has a reinforcement portion (72) arranged on a longitudinal axis (70) of the kingpin recess (14).

5. The fifth wheel plate according to any one of claims 1 to 4, **characterized in that** the reinforcement (50) has a reinforcement portion (74) disposed laterally adjacent a longitudinal axis (70) of the kingpin recess (14).

6. The fifth wheel plate according to one of claims 1 to 5, **characterized in that** the reinforcement (50) has a reinforcement section (79) which is U-shaped in plan view of the fifth wheel plate and is arranged around the kingpin recess (14).

7. The fifth wheel plate according to one of claims 1 to 6, **characterized in that** the fifth wheel plate (12) has a bearing block recess (37) in which a bearing block web (84) can be received.

8. The fifth wheel plate according to claim 7, **characterized in that** the armature covers the bearing block recess.

9. The fifth wheel plate according to claim 7 or 8, **characterized in that** a bearing bush (88) is inserted in the bearing block recess (37), which is connected to the reinforcement (50^{IV}).

10. The fifth wheel plate according to one of claims 1 to 9, **characterised in that** at least one connecting hole (34, 36) for connecting the fifth wheel plate (12) to a bearing block (20) and/or at least one locking bearing (28, 30) for a coupling lock (24) is formed in the fifth wheel plate (12).

11. The fifth wheel plate according to claim 10, **characterized in that** the reinforcement (50) surrounds the connecting hole (34, 36) and/or the locking bearing (28, 30).

12. A fifth wheel coupling (10) for a vehicle, comprising at least one bearing block (20), a fifth wheel plate (12) and a king pin (46), wherein the fifth wheel plate (12) is a fifth wheel plate (12) according to one of claims 1 to 11, and/or wherein a reinforcement (96) of a material having a high strength is integrated into the bearing block (20).

13. A method of manufacturing a fifth wheel plate (12) for a fifth wheel coupling (10), wherein the fifth wheel plate (12) has a top surface for receiving vertical forces and a recess (14) for inserting a kingpin (46), and wherein the fifth wheel plate (12) comprises a lightweight material,
**characterized in that**
the fifth wheel plate (12) is made of a light metal in a casting process, wherein a reinforcement (50) of a material having a higher strength than that of the light metal is cast into the fifth wheel plate (12).

## Revendications

1. Plaque de sellette d'attelage (12) pour une sellette d'attelage (10), la plaque de sellette d'attelage (12) possédant un côté supérieur destiné à absorber les forces verticales et une cavité (14) servant à l'introduction d'un pivot d'attelage (46) et la plaque de sellette d'attelage (12) présentant un matériau de construction léger,
**caractérisée en ce que**
la plaque de sellette d'attelage (12) est fabriquée à partir d'un métal léger dans un procédé de moulage, une armature (50) en un matériau plus solide que le métal léger étant coulée dans la plaque de sellette d'attelage (12).

2. Plaque de sellette d'attelage selon la revendication 1, l'armature (50) possédant une tresse sensiblement bidimensionnelle composée d'au moins une tige d'armature (76, 78).

3. Plaque de sellette d'attelage selon la revendication 1 ou 2, **caractérisée en ce que** l'armature (50) possède une tresse tridimensionnelle composée d'au moins une tige d'armature (80).

4. Plaque de sellette d'attelage selon l'une des revendications 1 à 3, **caractérisée en ce que** l'armature (50) possède une portion d'armature (72) qui est disposée sur un axe longitudinal (70) de la cavité de pivot d'attelage (14).

5. Plaque de sellette d'attelage selon l'une des revendications 1 à 4, **caractérisée en ce que** l'armature (50) possède une portion d'armature (74) qui est disposée latéralement à côté d'un axe longitudinal (70) de la cavité de pivot d'attelage (14).

6. Plaque de sellette d'attelage selon l'une des revendications 1 à 5, **caractérisée en ce que** l'armature (50) possède une portion d'armature (79) qui, vue de dessus sur la plaque de sellette d'attelage, est en forme de U et est disposée autour de la cavité de pivot d'attelage (14).

7. Plaque de sellette d'attelage selon l'une des revendications 1 à 6, **caractérisée en ce que** la plaque de sellette d'attelage (12) possède un logement de support de coussinet (37) dans lequel peut être accueillie une nervure de support de coussinet (84).

8. Plaque de sellette d'attelage selon la revendication 7, **caractérisée en ce que** l'armature recouvre le logement de support de coussinet.

9. Plaque de sellette d'attelage selon la revendication 7 ou 8, **caractérisée en ce qu'**un coussinet (88), qui est relié à l'armature (50^{IV}), est inséré dans le logement de support de coussinet (37).

10. Plaque de sellette d'attelage selon l'une des revendications 1 à 9, **caractérisée en ce qu'**au moins un trou de liaison (34, 36) destiné à relier la plaque de sellette d'attelage (12) à un support de coussinet (20) et/ou au moins un palier à fermeture (28, 30) pour une fermeture d'attelage (24) est formé dans la plaque de sellette d'attelage (12).

11. Plaque de sellette d'attelage selon la revendication 10, **caractérisée en ce que** l'armature (50) entoure le trou de liaison (34, 36) et/ou le palier à fermeture (28, 30).

12. Sellette d'attelage (10) pour un véhicule, comprenant au moins un support de coussinet (20), une plaque de sellette d'attelage (12) et un pivot d'attelage (46), la plaque de sellette d'attelage (12) étant une plaque de sellette d'attelage (12) selon l'une des revendications 1 à 11 et/ou une armature (96) en un matériau solide étant intégré dans le support de coussinet (20).

13. Procédé de fabrication d'une plaque de sellette d'attelage (12) pour une sellette d'attelage (10), la plaque de sellette d'attelage (12) possédant un côté supérieur destiné à absorber les forces verticales et une cavité (14) servant à l'introduction d'un pivot d'attelage (46) et la plaque de sellette d'attelage (12) présentant un matériau de construction léger,
**caractérisé en ce que**
la plaque de sellette d'attelage (12) est fabriquée à partir d'un métal léger dans un procédé de moulage, une armature (50) en un matériau plus solide que le métal léger étant coulée dans la plaque de sellette d'attelage (12).
